# EUROPÄISCHE PATENTSCHRIFT

(11) **EP 3 602 535 B1**
(45) Veröffentlichungstag und Bekanntmachung des Hinweises auf die Patenterteilung: **29.09.2021**
(21) Anmeldenummer: 18714956.2
(22) Anmeldetag: 23.03.2018
(51) Int. Cl.: G09F 21/04

(54) **TRANSPORTBEHÄLTER UND VERFAHREN ZUR ANZEIGE VON DATEN AN EINEM TRANSPORTBEHÄLTER**
TRANSPORT CONTAINER AND METHOD FOR DISPLAYING DATA ON A TRANSPORT CONTAINER
RÉCIPIENT DE TRANSPORT ET PROCÉDÉ D'AFFICHAGE DE DONNÉES SUR UN RÉCIPIENT DE TRANSPORT

(30) Priorität: 23.03.2017 AT 5004717 U
(43) Veröffentlichungstag der Anmeldung: 05.02.2020
(73) Patentinhaber: Lorrygram GmbH, 4840 Vöcklabruck (AT)
(72) Erfinder: STRASSER, Johann Jun., 5020 Salzburg (AT); STRASSER, Johann Sen., 5301 Eugendorf (AT)
(74) Vertreter: SONN Patentanwälte OG
(86) Internationale Anmeldenummer: PCT/AT2018/060070
(87) Internationale Veröffentlichungsnummer: WO 2018/170526

(56) Entgegenhaltungen:
- WO-A1-2016/154655
- US-A1- 2003 127 876
- US-A1- 2008 030 427
- US-A1- 2010 043 264

## Beschreibung

Die Erfindung betrifft einen Transportbehälter nach Anspruch 1, insbesondere Fahrzeugaufbau oder Container, aufweisend:
- einen Rahmenaufbau, welcher einen Transportraum einschließt,
- eine mit dem Rahmenaufbau verbundene Seitenwand,
- eine Öffnungseinrichtung zum Überführen der Seitenwand zwischen einer am Rahmenaufbau anliegenden Schließstellung, in welcher eine seitliche Ladeöffnung des Rahmenaufbaus durch die Seitenwand verschlossen ist, und einer die seitliche Ladeöffnung freigebenden Offenstellung,
- eine Anzeigeeinrichtung zur Anzeige von Daten an einer Außenseite der Seitenwand.

Weiters betrifft die Erfindung ein Verfahren zur Anzeige von Daten an einer Seitenwand eines Transportbehälters.

In der EP 3 048 599 A1 wurde bereits ein gattungsgemäßes Verfahren zur Anzeige von Daten an einer Seitenfläche eines LKW vorgeschlagen. Dabei werden die Daten abhängig von der aktuellen Postion des LKW und der aktuellen Ausrichtung der Seitenfläche des LKW ausgewählt. So können die Daten relative Angaben zu einem in der Nähe des Fahrzeugs befindlichen Ort enthalten. Diese Daten können z. B. Aufforderungen an den Betrachter umfassen, sich zu einem Ort umzudrehen, oder einem Ort Aufmerksamkeit zu widmen, der auf der dem Betrachter gegenüberliegenden Seite des Fahrzeugs liegt. Als Display kann beispielsweise ein elektronisches Papier verwendet werden. Weiters wird beschrieben, dass die Informationsanzeige von Mobilfunkdaten abhängig gemacht werden kann, die von mobilen Geräten in der Nähe des Fahrzeugs ausgesandt werden. Die Mobilfunkdaten können Aufschluss über Interessen des Nutzers geben, so dass auf den Nutzer zugeschnittene Anzeigen dargestellt werden.

Weiters zeigt die US 2008/030427 A1 ein Fahrzeug mit einem Display und die US 2010/043264 A1 ein Fahrzeug mit einer Werbefolie und einer Beleuchtungsquelle.

Bei dem Stand der Technik kann jedoch nachteiligerweise nicht ausgeschlossen werden, dass die Anzeigeeinrichtung an der Seitenfläche des LKW in dafür ungeeigneten Verkehrssituationen aktiviert wird. Demgemäß könnte von den zuständigen Aufsichtsbehörden beispielsweise gefordert werden, dass die Datenanzeige während der Fahrt unterbunden wird, um eine Ablenkung anderer Verkehrsteilnehmer zu vermeiden.

Die Aufgabe der Erfindung besteht darin, die Nachteile des Standes der Technik zu beheben bzw. zu lindern. Die Erfindung setzt sich daher insbesondere zum Ziel, einen Transportbehälter und ein Verfahren, wie eingangs angegeben, zu schaffen, womit eine stärkere Kontrolle über die Anzeige von Daten an der Seitenwand des Transportbehälters ermöglicht wird.

Diese Aufgabe wird durch einen Transportbehälter mit den Merkmalen von Anspruch 1 und durch ein Verfahren mit den Merkmalen von Anspruch 10 gelöst.

Der erfindungsgemäße Transportbehälter ist gekennzeichnet durch
- eine Messeinrichtung zur Erfassung der Offenstellung der Seitenwand und
- eine Freigabeeinrichtung zur Freigabe der Anzeigeeinrichtung für die Anzeige von Daten bei Erfassung der Offenstellung der Seitenwand.

Bei dem erfindungsgemäßen Verfahren zur Anzeige von Daten an einer Seitenwand eines Transportbehälters werden zumindest die folgenden Schritte durchgeführt:
- Überführen der Seitenwand von einer Schließ- in eine Offenstellung,
- Erfassen der Offenstellung der Seitenwand, und
- Freigabe der Anzeige von Daten an der Seitenwand bei Erfassung der Offenstellung der Seitenwand.

Demnach weist der erfindungsgemäße Transportbehälter einen Betriebsmodus auf, bei welchem die Anzeigeeinrichtung in der Schließstellung der Seitenwand und während der Überführung der Seitenwand von der Schließ- in Richtung der Offenstellung für die Anzeige von Daten, wie Bild- oder Videodaten, gesperrt ist. Die Messeinrichtung ist dazu eingerichtet, die Überführung der Seitenwand von der Schließ- in die Offenstellung zu überwachen. Bei Erreichen der Offenstellung der Seitenwand übermittelt die Messeinrichtung ein Freigabesignal an die Freigabeeinrichtung, welche daraufhin die Anzeigeeinrichtung für die Datenanzeige freigibt. Das Freigabesignal der Messeinrichtung über das Erreichen der Offenstellung ist bei diesem Betriebsmodus also eine notwendige Bedingung dafür, dass Daten an der Anzeigeeinrichtung angezeigt werden können. Bei einer bevorzugten Ausführungsvariante wird die Datenanzeige an der Anzeigeeinrichtung im freigeschalteten Zustand der Anzeigeeinrichtung über ein Bediengerät aktiviert. Das Bediengerät kann an dem Transportbehälter, beispielsweise in einem zugehörigen Führerhaus, vorgesehen, insbesondere verbaut, sein. Alternativ kann die Aktivierung der Datenanzeige über ein mobiles Bediengerät, beispielsweise über ein Mobiltelefon oder einen Tabletcomputer, vorgenommen werden. Bevorzugt wird die Auswahl von Daten für die Anzeige an der Anzeigeeinrichtung nicht zugelassen oder es wird an dem Bediengerät eine Fehlermeldung ausgegeben, wenn am Bediengerät eine Datenanzeige an der Anzeigeeinrichtung in deren gesperrten Zustand, d.h. vor dem Erreichen der Offenstellung der Seitenwand, initiiert wird.

An der Anzeigeeinrichtung können beliebige Daten, insbesondere Bilder und Videos, angezeigt werden. Beispielsweise eignet sich der Transportbehälter für die Anzeige von Werbungen, welche auch abhängig von der Position und der Orientierung des Transportbehälters ausgewählt werden können. Darüber hinaus kann bevorzugt vorgesehen sein, dass die Anzeigeeinrichtung mit mobilen Geräten in der Nähe des Transportbehälters kommuniziert, um personenbezogene Daten an der Anzeigeeinrichtung auszugeben.

Zur Überführung der Seitenwand von der Schließ- in die Offenstellung weist die Öffnungseinrichtung bevorzugt einen Antrieb, insbesondere einen Linearantrieb, vorzugsweise einen ZylinderKolben-Antrieb, auf.

Für die Erfassung der Offenstellung der Seitenwand ist die Messeinrichtung in einer bevorzugten Ausführungsform zur Erfassung einer Einschaltdauer des Antriebs eingerichtet. Die Einschaltdauer des Antriebs ab Einleitung des Öffnungsvorgangs korrespondiert mit dem Öffnungszustand der Seitenwand, so dass über die Einschaltdauer zuverlässig auf das Erreichen der Offenstellung geschlossen werden kann.

In einer weiteren bevorzugten Ausführungsform ist die Messeinrichtung zur Erfassung eines Öffnungswinkels der Seitenwand eingerichtet. Bei dieser Ausführungsform wird der Öffnungszustand der Seitenwand über den Öffnungswinkel der Seitenwand erfasst.

In einer weiteren bevorzugten Ausführungsform ist die Messeinrichtung zur Erfassung einer Wegstrecke des Zylinder-Kolbenantriebs eingerichtet. Die Wegstrecke des Zylinder-Kolbenantriebs im betätigten Zustand wird auf definierte Weise in die Überführung der Seitenwand von der Schließ- in die Offenstellung umgesetzt, so dass das Erreichen der Offenstellung der Seitenwand über die Wegstrecke des Zylinder-Kolbenantriebs ab Einleitung des Öffnungsvorgangs festgestellt werden kann.

Um die Anzeige der Daten nur im freigegebenen Zustand, aber nicht im gesperrten Zustand der Anzeigeeinrichtung zu ermöglichen, kann die Freigabeeinrichtung eine elektronische Steuereinheit aufweisen, mit welcher die Datenanzeige an der Anzeigeeinrichtung gesteuert wird. Bei Erfassung der Offenstellung der Seitenwand über die Messeinrichtung kann in der elektronischen Steuereinheit ein Freigabeparameter gesetzt werden, mit welchem die Anzeigeeinrichtung für die Anzeige der Daten freigeschalten wird. Die elektronische Steuereinheit ist mit einem Datenspeicher verbunden, wobei Daten von dem Datenspeicher an die Anzeigeeinrichtung übertragen werden können. Der Datenspeicher kann an dem Transportbehälter, d.h. lokal, vorgesehen sein. Selbstverständlich kann der Datenspeicher jedoch an einem vom Transportbehälter entfernten Server vorgesehen sein, wobei die Datenübertragung zwischen dem Server und der elektronischen Steuereinheit über ein drahtloses Netzwerk vorgenommen werden kann. Bei diesen Ausführungsformen ist das Umschalten der Anzeigeeinrichtung vom gesperrten Zustand in den freigegebenen Zustand ausschließlich über Software umgesetzt. Weiters kann die elektronische Steuereinheit aber auch dazu eingerichtet sein, die Anzeigeeinrichtung abhängig vom Öffnungszustand der Seitenwand ein- und auszuschalten, um die Datenanzeige an der Anzeigeeinrichtung freizugeben oder zu sperren.

Um eine Fernkommunikation des Transportbehälters zu ermöglichen und die Daten auf vielfältige Weise an unterschiedliche Anwendungen anpassen zu können, ist bevorzugt ein Datenempfänger zum Empfang von Sendedaten, beispielsweise Mobilfunkdaten oder Funkdaten zur Kommunikation per WLAN oder Bluetooth, eines entfernten Kommunikationsmoduls vorgesehen, wobei die elektronische Steuereinheit zur Auswahl von Daten für die Anzeige an der Anzeigeeinrichtung abhängig von den Sendedaten des entfernten Kommunikationsmoduls eingerichtet ist. Das entfernte Kommunikationsmodul kann beispielsweise an einem Mobilfunkgerät vorgesehen, welches von einer Person in der Umgebung des Transportbehälters mitgeführt wird.

Bei einer besonders bevorzugten Ausführungsform ist eine Ladegutsicherung zur Sicherung von Ladegut in dem Transportraum vorgesehen, wobei die Anzeigeeinrichtung zur Anzeige von Ladeinformationen in Bezug auf das Ladegut eingerichtet ist. Demnach kann das Beladen des Transportbehälters dadurch wesentlich vereinfacht werden, dass an der Anzeigeeinrichtung Ladeinformationen, beispielsweise über die Art, die Menge, die Ladeposition oder die Ladereihenfolge des Ladeguts, angezeigt werden. Bevorzugt befindet sich die Seitenwand in der Offenstellung zumindest teilweise, beispielsweise in Form eines unteren Seitenwandteils, in einer vertikalen Betriebsposition, so dass die Anzeigeeinrichtung beim Beladen des Transportbehälters zumindest teilweise im Wesentlichen parallel zur seitlichen Ladeöffnung des Transportbehälters, oberhalb davon angeordnet ist. Dadurch hat das Bedienpersonal die Anzeigeeinrichtung bei der Annäherung an den Transportbehälter gut im Blick, so dass das Beladen unter Zuhilfenahme der Ladeinformationen wesentlich einfacher gestaltet werden kann.

Besonders bevorzugt werden an der Anzeigeeinrichtung Ladeinformationen in Form von bildlichen, schriftlichen oder symbolischen Darstellungen des Ladeguts angezeigt, um das einfache Verstauen von Ladegut an vorgegebenen Ladestellen im Transportraum des Transportbehälters zu ermöglichen. Besonders günstig ist es hierbei, wenn die Darstellungen des Ladeguts, beispielsweise in Form von Abbildungen, Piktogrammen oder schriftlichen Bezeichnungen, unmittelbar oberhalb der zugehörigen Ladestellen für das Ladegut im Transportraum erscheinen. Wenn die Ladestellen an aufeinanderfolgenden Längspositionen des Transportbehälters vorgesehen sind, erscheinen die Darstellungen des Ladeguts an der Anzeigeeinrichtung im Wesentlichen an denselben Längspositionen wie die Ladestellen im Transportraum. Die Längspositionen beziehen sich hierbei auf die Längsachse des Transportbehälters, welche bei einer Ausführung des Transportbehälters als Fahrzeugaufbau in Richtung der Geradeausfahrt verläuft. Vorteilhafterweise wird so die Einordnung des Ladeguts in die passenden Ladestellen durch das Bedienpersonal wesentlich vereinfacht. Bei dieser Ausführung wird daher die Längsposition des Ladeguts über die Anzeigeeinrichtung veranschaulicht. Wenn der Transportraum darüber hinaus mehrere übereinander angeordnete Ladestellen aufweist, um eine vertikale Schichtung von Ladegut in dem Transportraum zu ermöglichen, können an der Anzeigeeinrichtung Darstellungen der zugehörigen Ladegüter übereinander, in derselben vertikalen Reihenfolge wie die Ladestellen im Transportraum angezeigt werden.

Die Funktionalität des Transportbehälters kann noch dahingehend erweitert werden, dass das Ladegut mit einem Datensender versehen ist, welcher für eine Datenkommunikation mit der elektronischen Steuereinheit eingerichtet ist. Dadurch können an der Anzeigeeinrichtung selbständig die passenden Ladeinformationen angezeigt werden, wenn das Ladegut mit dem Datensender zum Transportbehälter gebracht wird.

Bei einer besonders bevorzugten Ausführungsform ist eine Detektoreinheit zur Erfassung eines gesicherten Zustands des Ladeguts an der Ladegutsicherung vorgesehen, wobei die Anzeigeeinrichtung zur Anzeige des gesicherten Zustands des Ladeguts an der Ladegutsicherung eingerichtet ist. Bei dieser Ausführungsform wird der gesicherte Zustand des Ladeguts an der Ladegutsicherung erfasst. Beispielsweise kann die Detektoreinheit dazu eingerichtet sein, den Rastzustand einer Rastvorrichtung der Ladegutsicherung festzustellen, so dass an der Anzeigeeinrichtung vom Rastzustand abhängige Statusinformationen, beispielsweise eine bildliche oder symbolische Darstellung der Rastvorrichtung im verrasteten oder unverrasteten Rastzustand, ausgegeben werden können.

Für die Anzeige von Daten oberhalb der seitlichen Ladeöffnung ist es günstig, wenn die Seitenwand zumindest ein oberes Seitenwandteil und ein unteres Seitenwandteil aufweist, wobei das obere Seitenwandteil über eine Schwenkachse mit dem unteren Seitenwandteil verbunden ist. Bei dieser Ausführungsform ist das untere Seitenwandteil in der Offenstellung vorzugsweise im Wesentlichen vollständig oberhalb der seitlichen Ladeöffnung des Transportbehälters angeordnet, welche sich vorzugsweise im Wesentlichen über die gesamte Länge des Transportbehälters erstreckt. Dadurch wird eine einfache Beladung des Transportbehälters ermöglicht, wobei zugleich Daten an der Anzeigeeinrichtung angezeigt werden können.

Die Anzeigeeinrichtung weist zumindest ein erstes Anzeigeelement, insbesondere ein Display, beispielsweise ein OLED Display (engl "organic light emitting diode, zu Deutsch "organische Leuchtdiode), auf, welches sich vorzugsweise im Wesentlichen über die gesamte Länge der Seitenwand, insbesondere zudem über im Wesentlichen die gesamte Höhe des unteren Seitenwandteils, erstreckt. Die Ausführung des Displays ist jedoch für die vorliegende Offenbarung nicht wesentlich, da verschiedenste geeignete Displaytechnologien zur Verfügung stehen.

Darüber hinaus kann die Anzeigeeinrichtung ein zweites Anzeigeelement aufweisen, welches sich vorzugsweise im Wesentlichen über die gesamte Höhe und/oder Länge des oberen Seitenwandteils erstreckt.

Schließlich kann die Anzeigeeinrichtung ein drittes Anzeigeelement aufweisen, welches sich vorzugsweise im Wesentlichen über die gesamte Höhe und/oder Länge einer vertikalen Rückwand des Transportbehälters erstreckt.

Bei einer bevorzugten Ausführung weist die Rückwand zumindest ein oberes Rückwandteil und ein unteres Rückwandteil auf, wobei das obere Rückwandteil über eine Schwenkachse mit dem unteren Rückwandteil verbunden ist. Das dritte Anzeigeelement erstreckt sich vorzugsweise im Wesentlichen über die gesamte Länge und über im Wesentlichen die gesamte Höhe des unteren Rückwandteils. Zudem kann ein viertes Anzeigeelement vorgesehen sein, welches sich vorzugsweise im Wesentlichen über die gesamte Länge und über im Wesentlichen die gesamte Höhe des oberen Rückwandteils erstreckt.

Zur selbsttätigen Überführung zwischen der Schließ- und der Offenstellung der Seitenwand weist die Öffnungseinrichtung bevorzugt einen gelenkig mit der Seitenwand verbundenen Hubarm auf, wobei der Antrieb zur Drehmomentübertragung auf den Hubarm eingerichtet ist.

Die Erfindung wird nachstehend anhand eines in den Figuren dargestellten Ausführungsbeispiels weiter erläutert.
Fig. 1 zeigt einen erfindungsgemäßen Transportbehälter in Form eines Fahrzeugaufbaus mit einer Anzeigeeinrichtung an einer in der Schließstellung dargestellten Seitenwand.
Fig. 2 zeigt den Transportbehälter der Fig. 1 in der Offenstellung der Seitenwand.
Fig. 3 zeigt den Transportbehälter der Fig. 1, 2 in der Offenstellung der Seitenwand, wobei an der Anzeigeeinrichtung Ladeinformationen für das Verstauen von Ladegut im Inneren des Transportbehälters angezeigt werden.
Fig. 4 zeigt ein Blockschaltbild mit elektrischen Komponenten zur Steuerung der Anzeige von Daten an der Anzeigeeinrichtung.
Fig. 5 zeigt eine weitere Ausführungsform des Transportbehälters mit einer hochschwenkbaren Rückwand, an welcher Informationen und Werbungen angezeigt werden können.

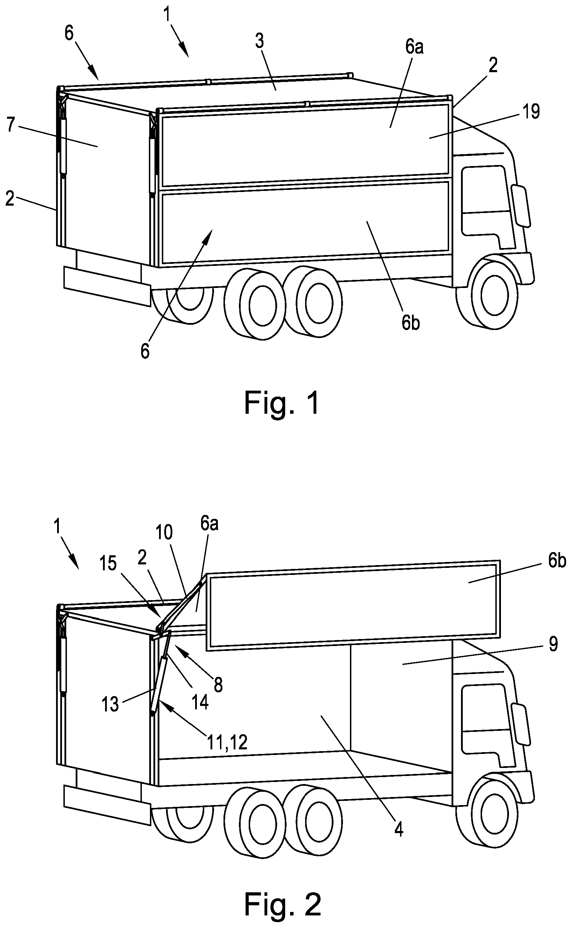

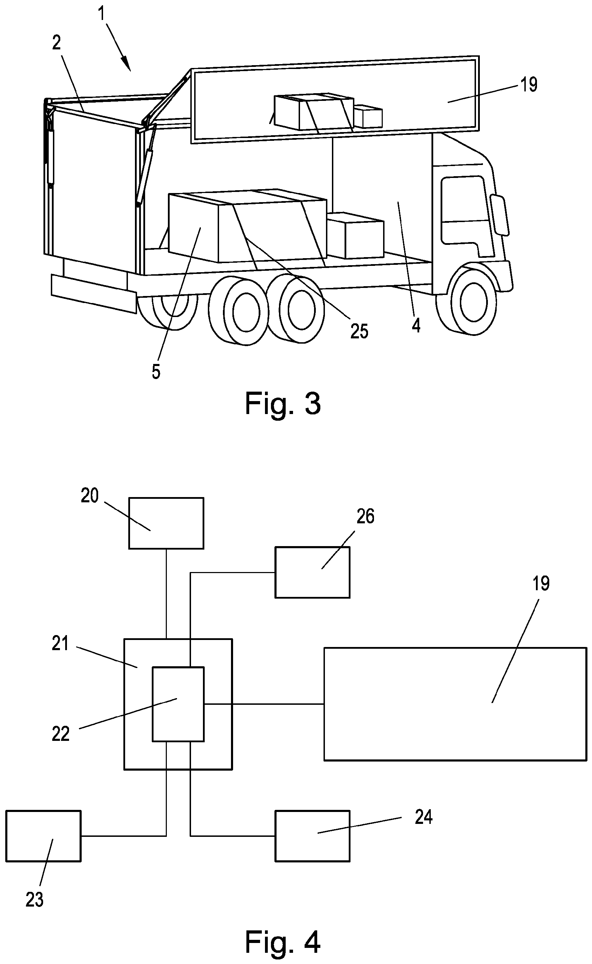

In Fig. 1 ist schematisch ein im Wesentlichen quaderförmiger Transportbehälter 1 gezeigt, der in der gezeigten Ausführung als Fahrzeugaufbau für einen Lastkraftwagen ausgebildet ist. Der Transportbehälter 1 weist einen in den Zeichnungen lediglich schematisch veranschaulichten Rahmenaufbau 2 mit horizontal und vertikal angeordneten Rahmenteilen auf. An der Oberseite des Rahmenaufbaus 2 ist ein Dachbereich 3 vorgesehen. Der Rahmenaufbau 2 des Transportbehälters 1 schließt einen Transportraum 4 zur Aufbewahrung von Ladegut 5 ein. Der Transportbehälter 1 weist zwei Seitenwände 6 und eine Rückwand 7 auf, welche den Transportraum 4 im Inneren des Rahmenaufbaus 2 begrenzen. Zum Beladen des Transportbehälters 1 ist zumindest eine der Seitenwände 6 um eine horizontale Schwenkachse am Rahmenaufbau 2 verschwenkbar gelagert. Zum Verschwenken der Seitenwand 6 weist der Transportbehälter 1 eine Öffnungsvorrichtung 8 auf. Beim Öffnen des Transportbehälters 1 wird die Seitenwand 6 aus einer am Rahmenaufbau 2 anliegenden Schließstellung (Fig. 1) in eine im Wesentlichen oberhalb des Dachbereichs 3 angeordnete Offenstellung (Fig. 2, 3) überführt. In der Offenstellung der Seitenwand 6 wird eine seitliche Ladeöffnung 9 freigegeben, so dass der Transportraum 4 des Transportbehälters 1 über die seitliche Ladeöffnung 9 beladen werden kann. Ausgehend von der gezeigten Offenstellung kann die Seitenwand 6 bevorzugt weiter in eine im Wesentlichen am Dachbereich 3 aufliegende Staustellung verschwenkt werden (nicht gezeigt).

In der Schließstellung gemäß Fig. 1 sind die Seitenwände 6 an den Längsseiten des Transportbehälters 1 in einer vertikalen Ebene angeordnet. Die Seitenwände 6 an den Längsseiten des Transportbehälters 1 sind beim gezeigten Ausführungsbeispiel jeweils zweiteilig, mit einem oberen Seitenwandteil 6a und mit einem unteren Seitenwandteil 6b, ausgebildet. Das obere Seitenwandteil 6a und das untere Seitenwandteil 6b der Seitenwand 6 sind gelenkig miteinander verbunden. Es können jedoch auch einteilige Seitenwände 6 vorgesehen sein (nicht gezeigt).

Zur Überführung der Seitenwand 6 zwischen der Schließ- und der Offenstellung ist ein Hubarm 10 vorgesehen, der am einen Ende um eine horizontale Schwenkachse am Rahmenaufbau 2 gelagert ist und am anderen Ende mit dem oberen Seitenwandteil 6b der Seitenwand 6 verbunden ist. In der gezeigten Ausführung fallen die Schwenkachse der Seitenwand 6 am Rahmenaufbau 2 und die Schwenkachse des Hubarms 10 am Rahmenaufbau 2 zusammen. In der gezeigten Ausführung ist der Hubarm 10 durch einen langgestreckten, längenunveränderlichen Lenker gebildet. Der Hubarm 10 ist mit einem Antrieb 11 verbunden, mit welchem die Seitenwand 6 selbsttätig aus der Schließ- in die Offenstellung überführbar ist. Der Antrieb 11 weist einen insbesondere hydraulisch betätigbaren Linearantrieb 12 mit einem Zylinder 13 und einem Kolben 14 auf, wobei der Kolben 14 durch Ansteuerung des Linearantriebs 12 aus dem Zylinder 13 verschieblich ist. Der Linearantrieb 12 ist am einen Ende gelenkig mit einem vertikalen Rahmenteil des Rahmenaufbaus 2 verbunden. Am anderen Ende ist der Linearantrieb 12 mit einem Kraftübertragungselement 15 verbunden, welches zwei gelenkig miteinander verbundene Hebelarme aufweist. Der eine Hebelarm ist am einen Ende gelenkig mit dem Hubarm 10 und am anderen Ende gelenkig mit dem Kolben 14 verbunden. Der andere Hebelarm ist am einen Ende gelenkig mit dem Rahmenaufbau 2 und am anderen Ende gelenkig mit dem einen Hebelarm verbunden. Eine solche Konstruktion ist aus der AT 517 056 A1 bekannt, so dass sich nähere Erläuterungen hierzu erübrigen können.

In der gezeigten Ausführungsform ist die Seitenwand 6 auf Seite der Schwenkachse am Rahmenaufbau 2 mit einem Torsionswellenelement verbunden, welches mit dem Hubarm 10 drehfest gekoppelt ist. Durch Verschwenkung des Hubarms 10 um die Schwenkachse zwischen der Seitenwand 6 und dem Rahmenaufbau 2 wird das Torsionswellenelement entsprechend verschwenkt, so dass die Seitenwand 6 von der Schließ- in die Offenstellung (vgl. Fig. 2) gebracht wird. Die dargestellte Öffnungsvorrichtung ist lediglich beispielhaft; im Stand der Technik sind verschiedenste andere Ausführungsformen vorgeschlagen worden, mit welchen die Seitenwand in die Offenstellung gebracht werden kann.

In der gezeigten Ausführung weist der Transportbehälter 1 zudem eine Anzeigeeinrichtung 19 zur Anzeige von Daten an der Außenseite der Seitenwand 6 auf.

Weiters ist eine in Fig. 4 erkennbare Messeinrichtung 20 zur Erfassung der Offenstellung der Seitenwand 6 vorgesehen. Die Messeinrichtung 20 kommuniziert mit einer Freigabeeinrichtung 21, welche dazu eingerichtet ist, die Anzeige von Daten in der Offenstellung der Seitenwand 6 freizugeben, jedoch in der Schließstellung und in den Zwischenstellungen zwischen der Schließ- und der Offenstellung zu blockieren. Diese Funktionalität ist bei dem Transportbehälter zumindest als eigenständiger Betriebsmodus implementiert. Es ist jedoch denkbar, dass der Transportbehälter in einem weiteren Betriebsmodus verwendet werden kann, bei welchem die Anzeige von Daten vor Erreichen der Offenstellung, insbesondere auch bereits in der Schließstellung, ermöglicht wird. Der weitere Betriebsmodus würde sich beispielsweise für Länder mit geringeren behördlichen Auflagen eignen.

Je nach Ausführung kann die Messeinrichtung 20 beispielsweise zur Erfassung einer Einschaltdauer des Antriebs 11 eingerichtet sein, um aus der Einschaltdauer des Antriebs 11 und der bekannten Öffnungsgeschwindigkeit des Antriebs 11 auf das Erreichen der Offenstellung nach Einleitung des Öffnungsvorgangs schließen zu können.

Die Freigabeeinrichtung 21 weist eine elektronische Steuereinheit 22 auf, mit welcher die Anzeige der Daten an der Anzeigeeinrichtung 19 gesteuert wird. Die elektronische Steuereinheit 22 ist in der gezeigten Ausführungsform mit einem lokalen Datenspeicher 23 verbunden, welcher Daten für die Anzeige an der Anzeigeeinrichtung 19 enthält. Darüber hinaus ist die elektronische Steuereinheit 22 in der gezeigten Ausführungsform mit einem Datenempfänger 24 verbunden, mit welchem Sendedaten, beispielsweise Mobilfunkdaten oder Funkdaten zur Kommunikation per WLAN oder Bluetooth, von einem entfernten Kommunikationsmodul, beispielsweise von einem Mobilfunkgerät, empfangen werden können. Die elektronische Steuereinheit 22 kann die Anzeige an der Anzeigeeinrichtung 19 in Abhängigkeit von den Empfangsdaten steuern.

Fig. 3 zeigt eine bevorzugte Weiterbildung des Transportbehälters gemäß Fig. 1, 2, wobei (schematisch) eine Ladegutsicherung 25 zur Sicherung des Ladeguts 5 in dem Transportraum 4 ersichtlich ist. An der Anzeigeeinrichtung 19 werden Ladeinformationen in Bezug auf das Ladegut 5 dargestellt. In der gezeigten Ausführung werden bildliche Darstellungen des Ladeguts 5 direkt oberhalb der zugehörigen Ladestellen im Transportraum 4 angezeigt, um das Einordnen des Ladeguts 5 zu erleichtern.

Zudem kann eine Detektoreinheit 26 (vgl. Fig. 4) zur Erfassung eines gesicherten Zustands des Ladeguts 5 an der Ladegutsicherung 25 vorgesehen sein. Die Detektoreinheit 26 ist mit der elektronischen Steuereinheit 22 verbunden, welche von der Detektoreinheit 26 über den Sicherungszustand des Ladeguts 5 informiert wird. Dadurch kann das Erreichen des gesicherten Zustands der Ladegutsicherung 25, beispielsweise über eine symbolhafte Darstellung der ordnungsgemäßen Verrastung oder Verzurrung des Ladeguts 5, an der Anzeigeeinrichtung 19 angezeigt werden.

Die Anzeigeeinrichtung 19 weist zumindest ein erstes Anzeigeelement auf, welches sich bevorzugt im Wesentlichen über die gesamte Länge und Höhe des unteren Seitenwandteils 6b erstreckt. Darüber hinaus kann die Anzeigeeinrichtung 19 ein zweites Anzeigeelement aufweisen, welches sich im Wesentlichen über die gesamte Höhe und Länge des oberen Seitenwandteils 6a erstrecken kann.

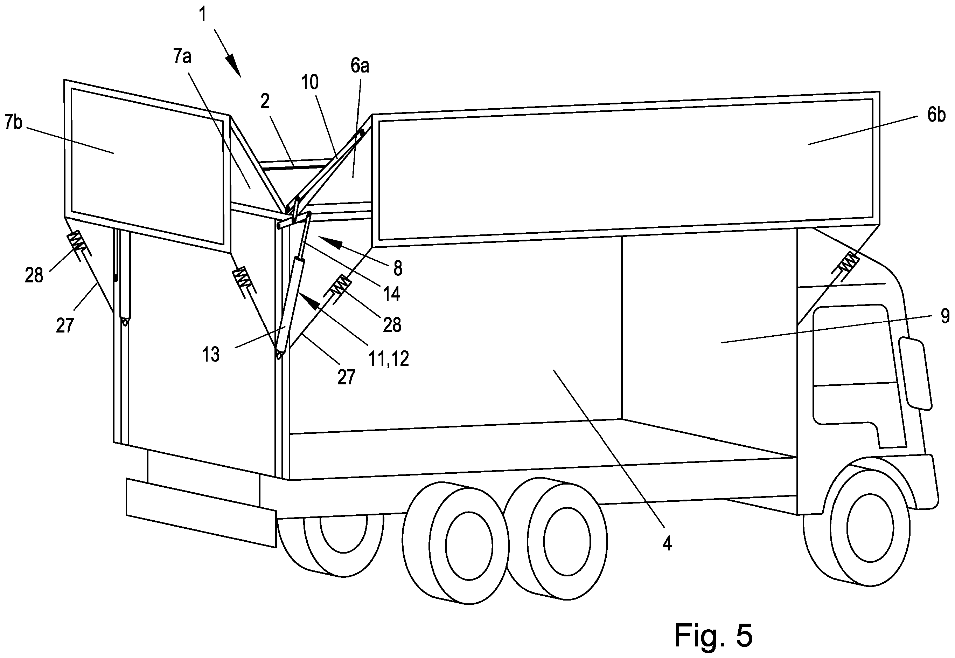

Fig. 5 zeigt eine abgewandelte Ausführung des Transportbehälters 1, bei welcher die Rückwand 7 zumindest ein oberes Rückwandteil 7a und ein unteres Rückwandteil 7b aufweist. Das obere Rückwandteil 7a ist über eine horizontale Schwenkachse mit dem unteren Rückwandteil 7b verbunden. Das obere Rückwandteil 7a ist über eine horizontale Schwenkachse mit dem Rahmenaufbau 2 verbunden, so dass die Rückwand 7 zwischen einer Schließstellung (nicht gezeigt) und einer eine rückseitige Ladeöffnung freigebende Offenstellung (vgl. Fig. 5) verschwenkbar ist. Je nach Ausführung kann die Anzeigeeinrichtung 19 ein drittes Anzeigeelement aufweisen, welches sich vorzugsweise im Wesentlichen über die gesamte Höhe und Länge des unteren Rückwandteils 7b erstreckt. Zudem kann ein viertes Anzeigeelement vorgesehen sein, welches sich vorzugsweise im Wesentlichen über die gesamte Länge und Höhe des oberen Rückwandteils 7a erstreckt. Das erste, zweite, dritte und/oder vierte Anzeigeelement kann jeweils ein Display, beispielsweise ein OLED Display, sein.

In Fig. 5 ist zudem schematisch ein Lenker 27 ersichtlich, welcher gelenkig mit dem unteren Ende des unteren Seitenwandteils 6b verbunden ist. Der Lenker 27 ist mittels einer Feder 28 längenverstellbar, um eine sichere Anordnung der Seitenwand 6 in der Schließstellung zu erleichtern.

## Patentansprüche

1. Transportbehälter (1), insbesondere Fahrzeugaufbau oder Container, aufweisend:
- einen Rahmenaufbau (2), welcher einen Transportraum einschließt,
- eine mit dem Rahmenaufbau verbundene Seitenwand (6),
- eine Öffnungseinrichtung (8) zum Überführen der Seitenwand (6) zwischen einer am Rahmenaufbau anliegenden Schließstellung, in welcher eine seitliche Ladeöffnung des Rahmenaufbaus durch die Seitenwand (6) verschlossen ist, und einer die seitliche Ladeöffnung freigebenden Offenstellung,
- eine Anzeigeeinrichtung (19) zur Anzeige von Daten an einer Außenseite der Seitenwand (6),
**gekennzeichnet durch**
- eine Messeinrichtung (20) zur Erfassung der Offenstellung der Seitenwand (6) und
- eine Freigabeeinrichtung (21) zur Freigabe der Anzeigeeinrichtung für die Anzeige von Daten bei Erfassung der Offenstellung der Seitenwand (6).

2. Transportbehälter (1) nach Anspruch 1, **dadurch gekennzeichnet, dass** die Öffnungseinrichtung (8) einen Antrieb (11), insbesondere einen Linearantrieb (12), vorzugsweise einen Zylinder-KolbenAntrieb (13, 14), aufweist.

3. Transportbehälter (1) nach Anspruch 1 oder 2, **dadurch gekennzeichnet, dass** die Messeinrichtung (20) zur Erfassung einer Einschaltdauer des Antriebs (11) und/oder zur Erfassung eines Öffnungswinkels der Seitenwand (6) und/oder zur Erfassung einer Wegstrecke des Zylinder-Kolbenantriebs (13, 14) eingerichtet ist.

4. Transportbehälter (1) nach einem der Ansprüche 1 bis 3, **dadurch gekennzeichnet, dass** die Freigabeeinrichtung (21) eine elektronische Steuereinheit (22) aufweist.

5. Transportbehälter (1) nach Anspruch 4, **dadurch gekennzeichnet, dass** ein Datenempfänger (24) zum Empfang von Sendedaten, beispielsweise Mobilfunkdaten oder Funkdaten zur Kommunikation per WLAN oder Bluetooth, eines entfernten Kommunikationsmoduls vorgesehen ist, wobei die elektronische Steuereinheit (22) zur Auswahl von Daten für die Anzeige an der Anzeigeeinrichtung (19) abhängig von den Sendedaten des entfernten Kommunikationsmoduls eingerichtet ist.

6. Transportbehälter (1) nach einem der Ansprüche 1 bis 5, **dadurch gekennzeichnet, dass** eine Ladegutsicherung (25) zur Sicherung von Ladegut (5) in dem Transportraum (4) vorgesehen ist, wobei die Anzeigeeinrichtung (19) zur Anzeige von Ladeinformationen in Bezug auf das Ladegut (5) eingerichtet ist.

7. Transportbehälter (1) nach Anspruch 6, **dadurch gekennzeichnet, dass** eine Detektoreinheit (26) zur Erfassung eines gesicherten Zustands des Ladeguts (5) an der Ladegutsicherung (25) vorgesehen ist, wobei die Anzeigeeinrichtung (19) zur Anzeige des gesicherten Zustands des Ladeguts (5) an der Ladegutsicherung (25) eingerichtet ist.

8. Transportbehälter (1) nach einem der Ansprüche 1 bis 7, **dadurch gekennzeichnet, dass** die Seitenwand (6) zumindest ein oberes Seitenwandteil (6a) und ein unteres Seitenwandteil (6b) aufweist, wobei das obere Seitenwandteil (6a) über eine Schwenkachse mit dem unteren Seitenwandteil (6b) verbunden ist.

9. Transportbehälter (1) nach einem der Ansprüche 2 bis 8, **dadurch gekennzeichnet, dass** die Öffnungseinrichtung (8) einen gelenkig mit der Seitenwand (6) verbundenen Hubarm (10) aufweist, wobei der Antrieb (11) zur Drehmomentübertragung auf den Hubarm (10) eingerichtet ist.

10. Verfahren zur Verwendung des Transportbehälters nach Anspruch 1 zur Anzeige von Daten an einer Seitenwand (6) eines Transportbehälters (1), mit den Schritten:
- Überführen der Seitenwand (6) von einer Schließ- in eine Offenstellung,
- Erfassen der Offenstellung der Seitenwand (6), und
- Freigabe der Anzeige von Daten an der Seitenwand (6) bei Erfassung der Offenstellung der Seitenwand (6).

## Claims

1. Transport container (1), in particular a vehicle body or container, comprising:
- a frame structure (2) which encloses a transport space,
- a side wall (6) connected to the frame structure,
- an opening device (8) for transferring the side wall (6) between a closed position abutting the frame structure, in which a lateral loading opening of the frame structure is closed by the side wall (6), and an open position exposing the lateral loading opening,
- a display device (19) for displaying data on an outer side of the side wall (6), **characterised by**
- a measuring device (20) for detecting the open position of the side wall (6) and
- an enabling device (21) for enabling the display device to display data when the open position of the side wall (6) is detected.

2. Transport container (1) according to claim 1, **characterised in that** the opening device (8) has a drive (11), in particular a linear drive (12), preferably a cylinder-piston drive (13, 14).

3. Transport container (1) according to either claim 1 or claim 2, **characterised in that** the measuring device (20) is designed to detect an operating time of the drive (11) and/or to detect an opening angle of the side wall (6) and/or to detect a travel path of the cylinder-piston drive (13, 14).

4. Transport container (1) according to any of claims 1 to 3, **characterised in that** the enabling device (21) has an electronic control unit (22).

5. Transport container (1) according to claim 4, **characterised in that** a data receiver (24) is provided for receiving transmission data, for example mobile radio data or radio data for communication via WLAN or Bluetooth, from a remote communication module, the electronic control unit (22) being designed to select data for display on the display device (19) on the basis of the transmission data from the remote communication module.

6. Transport container (1) according to any of claims 1 to 5, **characterised in that** a cargo securing device (25) is provided for securing cargo (5) in the transport space (4), the display device (19) being designed to display loading information in relation to the cargo (5).

7. Transport container (1) according to claim 6, **characterised in that** a detector unit (26) is provided on the cargo securing device (25) for detecting a secured state of the cargo (5), the display device (19) being designed to display the secured state of the cargo (5) on the cargo securing device (25).

8. Transport container (1) according to any of claims 1 to 7, **characterised in that** the side wall (6) has at least an upper side wall part (6a) and a lower side wall part (6b), the upper side wall part (6a) being connected to the lower side wall part (6b) via a pivot axis.

9. Transport container (1) according to any of claims 2 to 8, **characterised in that** the opening device (8) has a lifting arm (10) articulated to the side wall (6), the drive (11) being designed to transmit torque to the lifting arm (10).

10. Method for using the transport container according to claim 1 for displaying data on a side wall (6) of a transport container (1), comprising the following steps:
- transferring the side wall (6) from a closed to an open position,
- detecting the open position of the side wall (6), and
- enabling the display of data on the side wall (6) when the open position of the side wall (6) is detected.

## Revendications

1. Contenant de transport (1), en particulier carrosserie de véhicule ou conteneur, présentant :
- une caisse de châssis (2), laquelle renferme un espace de transport,
- une paroi latérale (6) reliée à la caisse de châssis,
- un dispositif d'ouverture (8) pour amener la paroi latérale (6) entre une position fermée s'appliquant sur la caisse de châssis, dans laquelle une ouverture de chargement latérale de la caisse de châssis est fermée par la paroi latérale (6), et une position ouverte libérant l'ouverture de chargement latérale,
- un dispositif d'affichage (19) pour afficher des données sur une face extérieure de la paroi latérale (6),
**caractérisé par**
- un dispositif de mesure (20) pour détecter la position ouverte de la paroi latérale (6) et
- un dispositif de libération (21) pour libérer le dispositif d'affichage pour l'affichage de données lors de la détection de la position ouverte de la paroi latérale (6).

2. Contenant de transport (1) selon la revendication 1, **caractérisé en ce que** le dispositif d'ouverture (8) présente un entraînement (11), en particulier un entraînement linéaire (12), de préférence un entraînement cylindre-piston (13, 14).

3. Contenant de transport (1) selon la revendication 1 ou 2, **caractérisé en ce que** le dispositif de mesure (20) est conçu pour détecter une durée de mise en marche de l'entraînement (11) et/ou pour détecter un angle d'ouverture de la paroi latérale (6) et/ou pour détecter un parcours de l'entraînement cylindre-piston (13, 14).

4. Contenant de transport (1) selon l'une quelconque des revendications 1 à 3, **caractérisé en ce que** le dispositif de libération (21) présente une unité de commande électronique (22).

5. Contenant de transport (1) selon la revendication 4, **caractérisé en ce qu'**un récepteur de données (24) est prévu pour recevoir des données d'émission, par exemple des données de téléphonie mobile ou des données radio aux fins de communication par WLAN ou Bluetooth, d'un module de communication distant, dans lequel l'unité de commande électronique (22) est conçue pour sélectionner des données à afficher sur le dispositif d'affichage (19) en fonction des données d'émission du module de communication distant.

6. Contenant de transport (1) selon l'une quelconque des revendications 1 à 5, **caractérisé en ce qu'**une fixation de marchandise chargée (25) est prévue pour fixer une marchandise chargée (5) dans l'espace de transport (4), dans lequel le dispositif d'affichage (19) est conçu pour afficher des informations de chargement concernant la marchandise chargée (5).

7. Contenant de transport (1) selon la revendication 6, **caractérisé en ce qu'**une unité de détection (26) est prévue pour détecter un état fixé de la marchandise chargée (5) sur la fixation de marchandise chargée (25), dans lequel le dispositif d'affichage (19) est conçu pour afficher l'état fixé de la marchandise chargée (5) sur la fixation de marchandise chargée (25).

8. Contenant de transport (1) selon l'une quelconque des revendications 1 à 7, **caractérisé en ce que** la paroi latérale (6) présente au moins une partie supérieure de paroi latérale (6a) et une partie inférieure de paroi latérale (6b), dans lequel la partie supérieure de paroi latérale (6a) est reliée à la partie inférieure de paroi latérale (6b) par l'intermédiaire d'un axe de pivotement.

9. Contenant de transport (1) selon l'une quelconque des revendications 2 à 8, **caractérisé en ce que** le dispositif d'ouverture (8) présente un bras de levage (10) relié de manière articulée à la paroi latérale (6), dans lequel l'entraînement (11) est conçu pour transmettre un couple au bras de levage (10).

10. Procédé pour utiliser le contenant de transport selon la revendication 1 pour l'affichage de données sur une paroi latérale (6)
d'un contenant de transport (1), avec les étapes :
- d'amenée de la paroi latérale (6) d'une position fermée dans une position ouverte,
- de détection de la position ouverte de la paroi latérale (6), et
- de libération de l'affichage de données sur la paroi latérale (6) lors de la détection de la position ouverte de la paroi latérale (6).
